# EUROPÄISCHE PATENTANMELDUNG

(11) **EP 1 557 921 A2**
(43) Veröffentlichungstag der Anmeldung: **27.07.2005**
(21) Anmeldenummer: 05000306.0
(22) Anmeldetag: 08.01.2005
(51) Int. Cl.: H02G 3/04, H02G 3/10

(54) **Anschlussvorrichtung für Starkstrom- und/oder Schwachstromleitungen**

(30) Priorität: 20.01.2004 DE 202004000759 U
(71) Anmelder: Tehalit GmbH, 67716 Heltersberg (DE)
(72) Erfinder: Wittmann, Jan, 67714 Waldfischbach-Burgalben (DE); Broschart, Peter, 67715 Geiselberg (DE); Speiser, Mathias, 67718 Schmalenberg (DE)
(74) Vertreter: Patentanwälte Möll und Bitterich

(57) **Zusammenfassung**

Gegenstand der Erfindung ist eine Anschlussvorrichtung (20) für Starkstrom- und/oder Schwachstromleitungen und/oder -kabel (1, 2) in Gebäuden mit Rohboden, Rohwand, Bodendämmung, Estrich, Bodenbelag und/oder Wandputz. Die Anschlussvorrichtung (20) besteht aus einem Haubenunterteil (21) und einem Haubenoberteil (24). Das Haubenunterteil (21) enthält Einrichtungen zum Befestigen einer Anschlussplatte (10) und Einrichtungen (22, 23) zum Befestigen an Rohboden bzw. Rohwand. Das Haubenoberteil (24) besitzt ein transparentes Fenster (25), welches den Blick auf die an der Anschlussplatte (10) befestigten Elektroinstallationsgeräte freigibt.

## Beschreibung

Die Erfindung betrifft Anschlussvorrichtungen für Starkstrom- und/oder Schwachstromleitungen und/oder -kabel gemäß dem Oberbegriff des Anspruchs 1 zur Verwendung in Gebäuden mit Rohboden, Rohwand, Bodendämmung, Estrich, Bodenbelag und/oder Wandputz, insbesondere in Neubauten von Wohn- und Bürogebäuden.

Aus der DE 202 10 774 U ist eine elektrotechnische und gegebenenfalls heizungstechnische Unterflurinstallation bekannt, die für Gebäude mit Rohboden und Rohwand sowie Bodendämmung, Estrich, Bodenbelag und/oder Putz bestimmt ist. Diese umfasst auf dem Rohboden gegebenenfalls in Leerrohren zu verlegende elektrische Kabel und/oder Leitungen, eine Anschlussplatte zum Festlegen der Enden der Kabel oder Leitungen und eine Haube, die die Anschlussplatte, die Leerrohre und/oder Kabel- und Leitungsenden überdeckt. Die Anschlussplatte besitzt Einrichtungen zur Befestigung an der Rohwand bzw. am Rohboden und Einrichtungen zum Befestigen der Kabel oder Leitungen bzw. der Leerrohre. Die Enden der Kabel und Leitungen sind über das Niveau des endgültigen Bodenaufbaus hochgezogen. Die Haube lässt sich niveaugleich mit dem endgültigen Bodenaufbau abschneiden.

Sobald die Haube abgeschnitten ist, sind die Enden der Kabel und Leitungen für weiterführende Installationsarbeiten zugänglich.

Bei der praktischen Arbeit hat sich herausgestellt, dass Verbesserungen an diesem Installationssystem wünschenswert sind. Insbesondere die Tatsache, dass Installationsarbeiten an dem Übergabepunkt nur durch Fachkräfte durchgeführt werden können, hat sich in der Praxis als hinderlich dargestellt.

Der vorliegenden Erfindung liegt daher die Aufgabe zugrunde, das bekannte Installationssystem derart weiterzuentwickeln, dass Installationsarbeiten auch von nicht ausgebildetem Personal einfach, schnell und sicher durchgeführt werden können.

Diese Aufgabe wird gelöst durch eine Anschlussvorrichtung mit den Merkmalen des Anspruchs 1.

Die vorliegende Erfindung löst die gestellte Aufgabe mit Hilfe eines Gehäuses, in dessen Inneren eine Anschlussplatte lösbar montiert ist. Diese Anschlussplatte ist mit Einrichtungen ausgerüstet, an denen Elektroinstallationsgeräte für Starkstrom und/oder Schwachstrom befestigt werden können. Die Kabel und Leitungen werden schon werksseitig an diesen Installationsgeräten angeklemmt. Dadurch können die weiterführenden Installationsarbeiten mit Hilfe von konfektionierten Steckern durchgeführt werden, was auch Laien gefahrlos durchführen können.

Dank einem transparenten Fenster in der Haube kann jederzeit festgestellt werden, welche Art von Anschlusskontakten die Anschlussvorrichtung bietet. Dazu muss die Haube nicht geöffnet werden, wodurch eine hohe elektrische Sicherheit gewährleistet wird.

Gemäß einer bevorzugten Ausgestaltung der Erfindung umfasst die Anschlussplatte eine Spannungsanzeige, insbesondere eine Leuchtdiode. Diese Spannungsanzeige ist auch durch das transparente Fenster hindurch jederzeit sichtbar und signalisiert, ob die an den Installationsgeräten aufgelegten Kabel und Leitungen in Betrieb sind oder nicht.

Vorteilhafte Ausgestaltungen und Weiterbildungen der Erfindung sind Gegenstand der übrigen Unteransprüche. Sie sollen anhand der Zeichnungen in Form von Ausführungsbeispielen näher erläutert werden. Es zeigen jeweils in isometrischer Darstellung
- Fig. 1: eine komplette Anschlussvorrichtung mit angeschlossenem Starkstromkabel und Schwachstromkabel,
- Fig. 2: eine mit Elektroinstallationsgeräten bestückte Anschlussplatte und
- Fig. 3: die Anschlussvorrichtung der Fig. 1, untergebracht in einem Bodenaufbau und mit bodengleich abgeschnittener Haube.

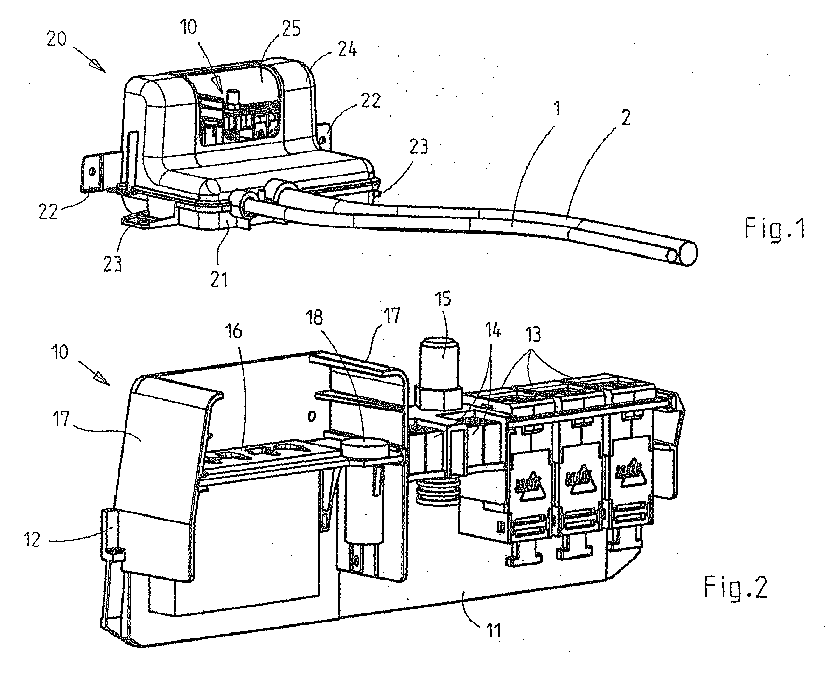

Fig. 1 zeigt eine Anschlussvorrichtung 20 für eine Starkstromleitung 1 und eine Schwachstromleitung 2. Die Anschlussvorrichtung 20 besteht aus einem Haubenunterteil 21 und einem Haubenoberteil 24. Das Haubenunterteil 21 ist mit Befestigungsvorrichtungen 22, 23 ausgerüstet, mit deren Hilfe es an der Rohwand bzw. am Rohboden eines Gebäudes (nicht dargestellt) befestigt werden kann.

Auf das Haubenunterteil 21 ist das Haubenoberteil 24 aufgesetzt. Dieses besitzt ein transparentes Fenster 25, welches den Blick auf eine im Inneren der Anschlussvorrichtung 20 montierte Anschlussplatte 10 freigibt.

Diese Anschlussplatte 10 ist in Fig. 2 in vergrößertem Maßstab dargestellt. Sie besitzt eine Rückenplatte 11, an der rechts und links Halterungen 12 angebracht sind, welche mit entsprechenden Einrichtungen im Haubenunterteil 21 korrespondieren. Darüber hinaus ist die Anschlussplatte 10 mit Einrichtungen ausgerüstet, an denen handelsübliche Installationsgeräte für Daten bzw. Schwachstrom 13, 14, 15 und/oder für Starkstrom 16 angesteckt werden können. Den Installationsgeräten 13, 14, 15, 16 sind Beschriftungsfelder 26 zugeordnet.

Zur Erhöhung der elektrischen Sicherheit ist das Starkstrom-Installationsgerät 16 von Isolierwänden 17 umgeben.

Auf der Anschlussplatte 10 ist ferner eine Spannungsanzeige in Form einer Leuchtdiode 18 montiert. Diese leuchtet, sobald das Starkstromkabel 1 bzw. das Daten- bzw. Schwachstromkabel 2 in Betrieb ist. Dadurch ist der Betriebszustand der Leitungen 1, 2 jederzeit auf einen Blick festzustellen.

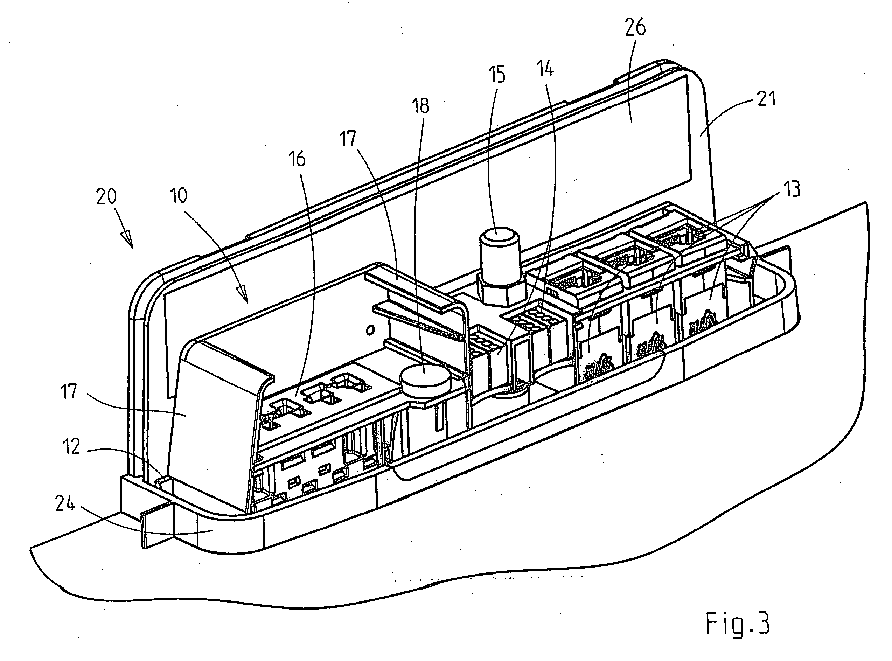

Fig. 3 zeigt die Anschlussvorrichtung 20 betriebsfertig montiert. Man erkennt das Haubenunterteil 21, die daran befestigte Anschlussplatte 10 sowie das Haubenoberteil 24. Dieses ist oberhalb des Bodenaufbaus abgeschnitten, so dass die Installationsgeräte 13, 14, 15, 16 leicht zugänglich sind.

## Patentansprüche

1. Anschlussvorrichtung (20) für Starkstrom- und/oder Schwachstromleitungen und/oder -kabel (1, 2) in Gebäuden mit Rohboden, Rohwand, Bodendämmung, Estrich, Bodenbelag und/oder Wandputz, insbesondere in Neubauten von Wohn- und Bürogebäuden, umfassend
- eine Anschlussplatte (10) mit Einrichtungen zum Befestigen der Enden der Kabel und Leitungen (1, 2),
- und ein Haubenoberteil (24), die die Anschlussplatte (10) und die Enden der Kabel und Leitungen (1, 2) überdeckt,
**gekennzeichnet durch** die Merkmale:
- es ist ein Haubenunterteil (21) vorgesehen mit
- Einrichtungen zum Befestigen der Anschlussplatte (10)
- und Einrichtungen (22, 23) zum Befestigen an Rohboden bzw. Rohwand,
- das Haubenoberteil (24) besitzt ein transparentes Fenster (25).

2. Anschlussvorrichtung nach Anspruch 1, **gekennzeichnet durch** das Merkmal:
- die Anschlussplatte (10) umfasst Halterungen (12) zum lösbaren Befestigen am Haubenunterteil (21).

3. Anschlussvorrichtung nach Anspruch 1 oder 2, **gekennzeichnet durch** das Merkmal:
- die Anschlussplatte (10) umfasst Halterungen für Starkstrominstallationsgeräte (16) und/oder Schwachstrominstallationsgeräte (13, 14, 15).

4. Anschlussvorrichtung nach einem der Ansprüche 1 bis 3, **gekennzeichnet durch** das Merkmal:
- die Anschlussplatte (10) umfasst eine Spannungsanzeige, insbesondere eine Leuchtdiode (18).

5. Anschlussvorrichtung nach einem der Ansprüche 1 bis 4, **gekennzeichnet durch** das Merkmal:
- den Installationsgeräten (13, 14, 15, 16) sind Beschriftungsfelder (26) zugeordnet.

6. Anschlussvorrichtung nach einem der Ansprüche 1 bis 5, **gekennzeichnet durch** das Merkmal:
- die Starkstrom-Installationsgeräte (16) sind mit Isolierwänden (17) umgeben.
